# EUROPEAN PATENT SPECIFICATION

(11) **EP 0 847 931 B1**
(45) Date of publication and mention of the grant of the patent: **31.03.2004**
(21) Application number: 97121551.2
(22) Date of filing: 08.12.1997
(51) Int. Cl.: B65D 65/40

(54) **Film for manufacturing flexible packages provided with security holograms and method for producing said film**
Folie zum Herstellen mit Sicherheitshologrammen versehener flexibler Verpackungen und Verfahren zum Herstellen dieser Folie
Film pour produire des emballages flexibles pourvu d'un hologramme de sécurité et procédé pour produire un tel film

(30) Priority: 13.12.1996 IT PD960309
(43) Date of publication of application: 17.06.1998
(73) Proprietor: Alcan Packaging Italia S.r.l., 36030 Lugo di Vicenza (IT)
(72) Inventor: Visona, Sergio, 3610 Chiuppano (IT)
(74) Representative: Modiano, Guido, Dr.-Ing.

(56) References cited:
- EP-A- 0 403 134
- EP-A- 0 585 076
- WO-A-91/18377
- WO-A-93/08084
- GB-A- 2 298 391

## Description

The present invention relates to a film adapted to manufacture flexible packages provided with a security hologram and to a method for producing said film.

Nowadays, most commercially available goods and products for sale and consumption are packaged, i.e., wrapped in a package which protects and safeguards said goods.

In supermarkets and food stores, for example, an ever-increasing and wide assortment of products are available such as bakery products, frozen food, precooked food, ready-made sauces and flavorings, preparations for soups or freeze-dried food, etcetera.

A new product is very often commercially successful because it meets a demand of a segment of the market with a new solution or because it assures particular quality and good taste or value.

In the latter case, therefore, the product is successful and wins over the consumer not because of its substantial originality but because it is rendered identifiable, i.e., it allows the consumer to know its production origin and accordingly its characteristics.

For every product that is commercially successful, as dictated by the laws of demand and supply, imitations and often even forgeries appear immediately which utilize the notoriety of a brand and of a product to create confusion and become undistinguishable from the original product.

This causes mainly an economical damage due to a reduced sales volume and, more severely and damagingly, a negative commercial image.

Therefore, every manufacturer needs having, for its product, a package that can certainly preserve it adequately (with appropriate isolation from the outside environment) but most of all gives the consumer the assurance that he can unequivocally identify its origin and quality, eliminating any forgery.

Some "luxury" items, such as credit cards or even currency bills, are identifiable and protected against forgery by using security holograms.

The use of a holographic image, because of its identifying characteristics, is highly effective, since its technical reproduction is difficult and its alteration is unfeasible.

All hologram manufacturers have in fact formed an association and created a data bank in which the images of all the holograms are filed as they are created.

When a user is interested in using a certain hologram, the manufacturer that he contacts must check whether the image of the chosen hologram is already present in the data bank; if he finds that it has already been filed, he must ask the owner for a user license in order to be allowed to reproduce it.

In this manner, forgeries and unauthorized reproductions are impossible.

Evidence of this is the fact that security holograms are currently used instead of the watermark in the currency bills of some countries, such as Germany.

Key characteristics for the effectiveness of such a security system are therefore on the one hand the technical difficulty of reproducing a hologram, i.e., the fact that hologram manufacturers are few and well-known, and on the other hand the need to ensure that the hologram cannot be removed from the product to which it is applied without destroying the package.

The aim of the present invention is to provide a film for manufacturing flexible packages which eliminates forgery and counterfeiting risks, eliminating all the drawbacks of conventional types.

In relation to this aim, a particular object of the present invention is to provide a film for manufacturing flexible packages which uses security holograms in order to prevent any counterfeiting.

An important object of the present invention is to provide a film for manufacturing flexible packages which uses a security hologram which cannot be removed without irreparably damaging said package.

An important object of the present invention is to provide a film for manufacturing flexible packages which allows to identify the product and its production origin beyond doubt.

An important object of the present invention is to provide a film for manufacturing flexible packages whose manufacturing cost is competitive with respect to equivalent conventional-type films.

An important object of the present invention is to provide a film for manufacturing flexible packages which can be obtained with the fullest possible use of available holographed films, so as to minimize the unusable part.

Another object of the present invention is to provide a film for producing flexible packages which can be manufactured without any size limitations.

Another object of the present invention is to provide a film for manufacturing flexible packages on which it is possible to form designs and aesthetic effects of any kind without limitations.

Another object of the present invention is to provide a film for manufacturing flexible packages provided with security holograms which can be obtained without using specific or particularly sophisticated equipment.

WO-A-93 08084 discloses a film for manufacturing flexible packages as defined in the preamble of claim 1.

This aim, these objects and others which will become apparent hereinafter are achieved with a film for manufacturing flexible packages, as defined in claim 1. The method for manufacturing said film is recited in claim 8.

Further characteristics and advantages of the present invention will become apparent hereinafter from the following detailed description of an embodiment thereof, illustrated only by way of non-limitative example in the accompanying drawings, wherein:

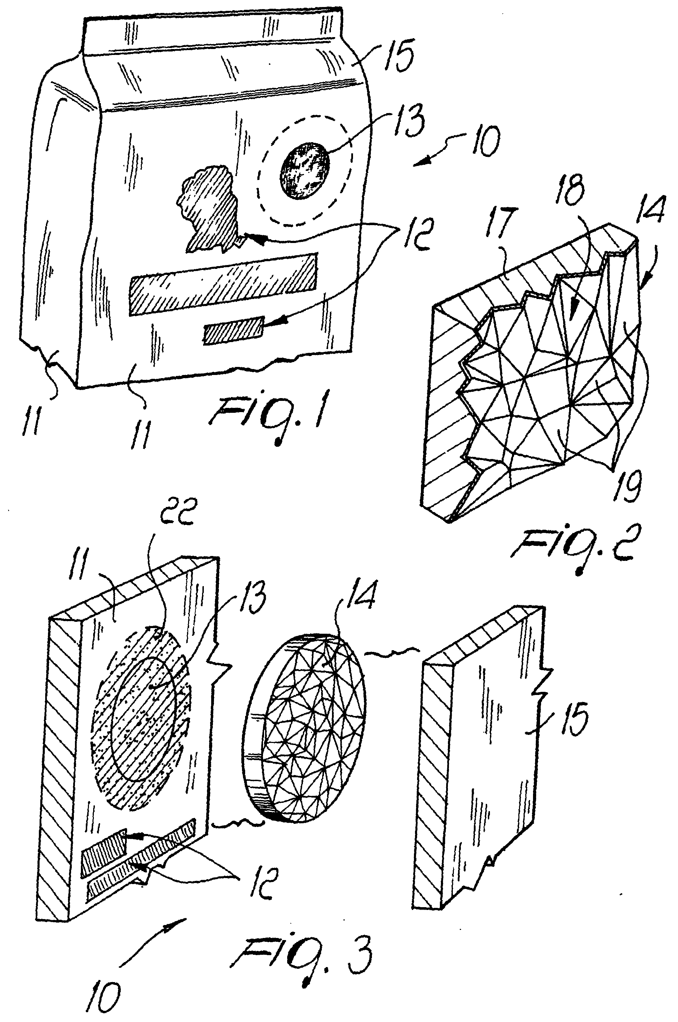

figure 1 is a perspective view of a film according to the present invention;

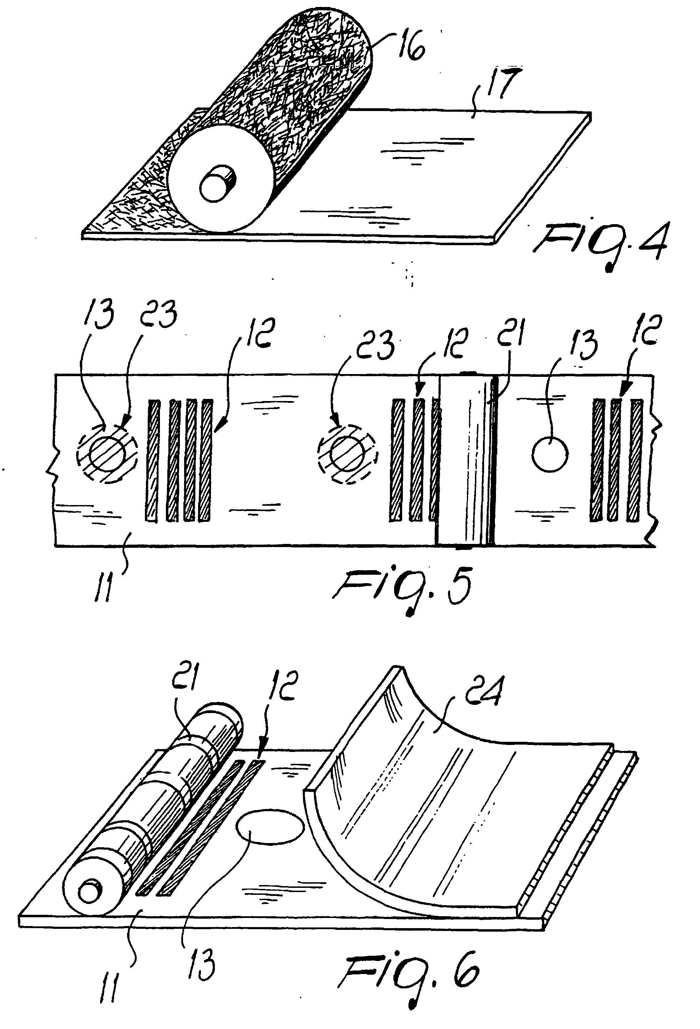

figure 2 is a perspective view of a holographic image;
figure 3 is an exploded view of the film according to the invention;
figure 4 is a view of a step of the method for producing a holographic image;

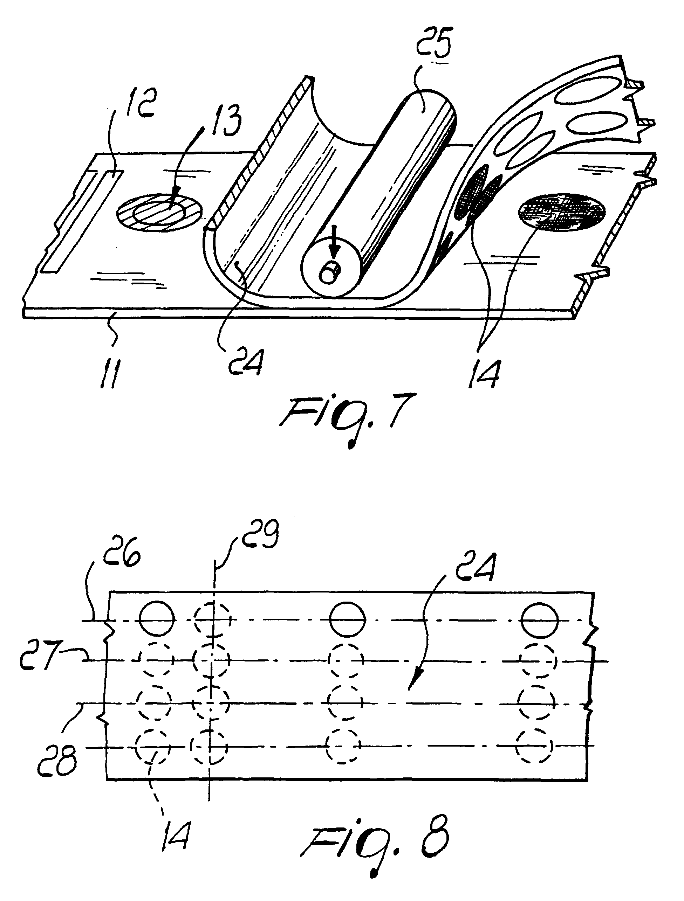

figures 5, 6, 7 and 8 are schematic views of the steps of the method for manufacturing the film according to the invention.

With reference to the above figures, a film adapted to form flexible packages provided with security holograms is generally designated by the reference numeral 10 and comprises a first sheet 11 made of plastics, such as for example polyethylene, polypropylene, polyester, polyamide and/or cellophane or equivalent materials.

The first sheet 11 has, in this embodiment, colored printings 12 on one face, with figures, images and/or characters which are adapted to identify the product preserved in the packages produced using the film 10.

The first sheet 11 has a face which is printed entirely except for a transparent portion 13 which in this case is circular.

A holographic image 14 is coupled at said portion 13, by means of an adhesive lacquer and in a manner described more clearly hereinafter, and is superimposed on the face of the first sheet 11 which is provided with the printing 12.

The film 10 according to the present invention is completed by a second sheet 15 made of transparent material coupled to the first sheet 11, for example by means of the interposition of an adhesive layer or by means of another conventional method, so that one of its sides faces the side provided with the printing 12 of the first sheet 11 on which the holographic image 14 is fixed.

The first sheet 15, too, is made of plastics, such as for example polyester, polyethylene or polypropylene.

The main function of the second sheet 15 is to make it impossible to remove the holographic image from the film 10.

The colored printings 12 fixed to the face of the first sheet 11 are also thus protected, through the coupling to the second sheet 15, from any damage that the packaging process might cause due to conveyance or handling mechanisms of the film 10.

The holographic image 14 is obtained by preparing a design on a computer and transferring it by means of an etching process onto a metallic master plate.

The master plate is used to form a calender 16, with which a thin sheet 17 of plastic material such as PVC, polyethylene or other equivalent material is imprinted.

The plastic sheet 17 can, in some embodiments, be provided with a layer of paint.

The sheet 17 remains imprinted at a calendered face 18 on which numberless flat portions 19 are provided, each portion being inclined with a different slope so as to form a series of microprisms.

Continuing with the production of the holographic image 14, the calendered face 18 of imprinted transparent material is metallized by producing the sublimation of aluminum, for example inside an autoclave, so that it deposits on the face 18, which is charged electrostatically beforehand.

The resulting sheet 17 is no longer transparent and the face 18, provided with the inclined portions 19 so as to form microprisms, is substantially a mirror capable of reflecting incident light and break it up by means of the inclined portions 19, thus creating the effect of an image whose colors vary as a function of the angle of incidence of the light and of the viewing angle.

The described film 10 can be used in combination, according to one of the per se known methods, so as to form multilayer products with sheets made of polyester, polypropylene, aluminum and the like coupled to the first sheet 11 or to the second sheet 15.

The method for manufacturing a film 10 adapted to provide flexible packages equipped with security holograms according to the invention consists, starting from the first sheet 11 made of transparent material, in printing on one face with a cylinder 20 of a conventional rotary machine, so as to obtain said printing 12 provided with designs and characters in different colors which at least partially cover said face of the first sheet 11, except for the circular portion 13, which remains transparent.

The first sheet 11 is printed continuously so as to space the nonprinted portions 13 with a preset pitch.

The method for obtaining the film 10 then entails spreading, with a second printing cylinder 21, an adhesive lacquer 23 which can be activated by pressure at each one of the portions 13 and at annular regions 22 that surround the portions 13, so as to adequately cover them.

The holographic images 14 are usually commercially available as holographed films 24 wound in rolls from which, by removing a portion, it is possible to obtain a holographic image 14 to be interposed between the first sheet 11 and the second sheet 15.

The method then consists in coupling a holographed film 24 above the first sheet 11.

Using a presser roller 25, pressure is applied to the holographed film 24 so that the holographic image 14 sticks to the part spread with adhesive lacquer 23 at the portion 13 and at the annular region 22 that surrounds it.

In this manner, a single piece of the holographed film 24 is transferred effectively so as to form the holographic image 14 of the film 10 according to the present invention.

The holographed film 24, during the production of the film 10, is unrolled, compressed with the roller 25 so as to cause the holographic image 14 to adhere to the part spread with adhesive lacquer 23 of the first sheet 11, and then rewound, so that after transferring the holographic image 14 it is ready to be used several times.

The rewinding of the holographed sheet 24 can occur immediately after its unrolling and compression with the roller 25, or can occur after a preset time, during which the holographed sheet 24 remains in contact with the first sheet 11 in order to ensure the effective transfer of the holographic image 14 from the holographed sheet 24 to the first sheet 11.

The first sheet 11 provided with the portions 13 on which the holographic images 14 have been glued is then coupled, for example by interposing an adhesive layer or by extruding a polyolefin resin such as polyethylene, to the second sheet 15 made of aluminum or other plastic material.

In an embodiment wherein the second sheet 15 is made of aluminum, the sheet can be coupled to a third sheet (or with a multilayer sheet) made of plastics such as polyethylene, polypropylene or barrier-type coextruded materials.

The holographic film 24 is unrolled, compressed with the roller 25 and rewound several times in order to use it as fully as possible.

During a first pass, holographic images 14 arranged in the direction designated by the reference numeral 26 are transferred; during a second pass, holographic images 14 arranged along the direction 27 are transferred, followed by those arranged along the direction 28 and so forth.

The holographed film 24 can also be used by putting in register the region to be transferred in the directions designated by the reference numeral 29 and so forth.

At each pass for using the holographed film 24, the film is put in register in order to position it correctly so that it can be utilized to the maximum possible extent.

In practice, it is evident that the present invention effectively achieves the intended aim and all the objects.

In particular, the present invention allows to produce films adapted to obtain packages of the flexible type which cannot be subjected to counterfeiting, alteration or unauthorized reproduction.

Another advantage is achieved with the present invention in that a film adapted to produce flexible-type packages is provided using a holographic image which cannot be removed without irreparably damaging said film.

An important advantage is achieved with the present invention in that a film for manufacturing flexible packages has been provided which allows to unmistakably identify the product contained therein and the origin of its production.

Another advantage is achieved with the present invention in relation to the fact that a film has been provided for manufacturing flexible-type packages which can be obtained with costs which are comparable to those of conventional types.

Another advantage is ensured with the present invention owing to the fact that a film for manufacturing flexible packages provided with security holograms is provided which can be obtained in practice by utilizing a holographed film to the maximum possible extent.

Another important advantage is achieved with the present invention in that a film for manufacturing flexible packages has been provided which has no manufacturing size limitations.

Another important advantage is achieved with the present invention in that a film for manufacturing flexible packages is provided which entails no limitations to the designs and aesthetic effects that can be reproduced thereon.

Another advantage is achieved with the present invention by the fact that a film for manufacturing flexible packages having security holograms has been devised which can be obtained through a simple manufacturing process.

Another advantage is ensured with the present invention in that there is provided a film adapted to form flexible packages provided with security holograms which does not require sophisticated and particular equipment or technologies for its practical execution.

The present invention is susceptible of numerous modifications and variations, all of which are within the scope of the claims appended thereto.

All the details may also be replaced with other technically equivalent elements.

The materials used, as well as the dimensions, may be any according to requirements.

## Claims

1. A film (10) for manufacturing flexible packages, comprising
-- at least one first sheet (11) provided with at least one transparent portion (13),
-- a holographic image (14) glued to said transparent portion (13), and
-- at least one second sheet (15) or multiple sheets coupled to said at least one first sheet (11) and to said holographic image (14) so as to form the film as a multilayer element, enclosing said holographic image (14), which is rendered nonremovable, between said at least one first sheet (11) and said at least one second sheet (15),
**characterized in that** said at least one transparent portion (13) and said holographic image (14) extend over part of the whole surfaces of said first (11) and second (15) sheets, a large portion of the first sheet (11), not covered by the holographic image (14), being directly coupled to the second sheet (15).

2. A film (10) for manufacturing flexible packages according to claim 1, **characterized in that** said first sheet (11) has, except for said transparent portion (13), printing (12) that reproduces designs, characters and/or images on one face.

3. A film (10) for manufacturing flexible packages according to claim 2, **characterized in that** said first sheet (11) is at least partially made of transparent material.

4. A film (10) for manufacturing flexible packages according to claim 1, **characterized in that** said first (11) and second (15) sheets are obtained by using plastic materials such as polyethylene, polypropylene, polyester.

5. A film (10) for manufacturing flexible packages according to claim 1, **characterized in that** said second sheet (15) is made of aluminum and is coupled to at least one third sheet made of plastics or coextruded barrier materials.

6. A film (10) for manufacturing flexible packages according to claim 1, **characterized in that** said at least one first sheet (11) is coupled to said at least one second sheet (15) by means of an adhesive layer or by extrusion of polyolefin resin.

7. A film (10) for manufacturing flexible packages according to claim 1, **characterized in that** it comprises one or more films which are coupled to said first (11) and second (15) sheets so as to provide a multilayer element, said films being made of plastics or aluminum.

8. A method for manufacturing a film (10) according to claim 1, adapted to produce flexible packages, consisting in:
-- spreading an adhesive lacquer (23) at least on said limited transparent portion (13) of said first sheet;
-- coupling a holographed film (24) to said limited portion (13) of said first sheet (11) on which adhesive lacquer (23) has been spread;
-- compressing said holographed film (24) at the limited portion (13) on which said adhesive lacquer (23) has been spread, so as to provide a stable transfer of a holographic image (14) onto said first sheet (11);
-- coupling said at least one second sheet (15) to said face of said first sheet (11) provided with said holographic image (14), so as to form said film (10).

9. A method for manufacturing a film (10), according to claim 8, which consists in printing one face of said first sheet (11) except for said transparent portion (13).

10. A method for manufacturing a film (10), according to claim 9, **characterized in that** said printed face of said first sheet (11) is the face on which said holographic image (14) is coupled.

11. A method for manufacturing a film (10), according to claim 8, **characterized in that** said holographic image (14) is transferred from a holographed film (24) by gluing and compression at the portion (13) of said first sheet (11) on which adhesive lacquer (23) has been spread.

12. A method for manufacturing a film (10) according to claim 11, consisting in rewinding and putting in register said holographed film (24), after transferring said holographic image (14) to the portion (13) of said first sheet (11) on which adhesive lacquer (23) has been spread, in order to use said holographed film (24) completely.

13. A method for manufacturing a film (10) according to claim 7, consisting in coupling said at least one first sheet (11) and/or said at least one second sheet (15) to one or more films so as to form a multilayer element, said films being made of plastics or aluminum.

## Patentansprüche

1. Folie (10) zum Herstellen flexibler Verpackungen mit:
- zumindest einer ersten Schicht (11), die mit zumindest einem transparenten Bereich (13) versehen ist,
- einem holografischen Bild (14), das auf den transparenten Bereich (13) aufgeklebt ist, und
- zumindest einer zweiten Schicht (15) oder mehreren Schichten, die mit der zumindest einen ersten Schicht (11) und dem holografischen Bild (14) verbunden sind, um die Folie als ein Mehrschichtelement auszubilden, des das holografische Bild (14), das nichtentfernbar aufgebracht ist, zwischen der zumindest einen ersten Schicht (11) und der zumindest einen zweiten Schicht (15) einschließt,
**dadurch**
**gekennzeichnet, dass** der zumindest eine transparente Bereich (13) und das holografische Bild (14) sich über einen Teil der gesamten Oberfläche der ersten (11) und zweiten (15) Schichten erstreckt,
wobei ein großer Bereich der ersten Schicht (11), der nicht durch das holografische Bild (14) bedeckt ist, unmittelbar mit der zweiten Schicht (15) verbunden ist.

2. Folie (10) zum Herstellen flexibler Verpackungen nach Anspruch 1, **dadurch gekennzeichnet, dass** die erste Schicht (11) mit Ausnahme des transparenten Bereiches (13) einen Aufdruck (12) aufweist, der auf einer Seite Muster, Buchstaben und/oder Bilder wiedergibt.

3. Folie (10) zum Herstellen flexibler Verpackungen nach Anspruch 2, **dadurch gekennzeichnet, dass** die erste Schicht (11) zumindest teilweise aus transparentem-Material hergestellt ist.

4. Folie (10) zum Herstellen flexibler Verpackungen nach Anspruch 1, **dadurch gekennzeichnet, dass** die ersten (11) und zweiten (15) Schichten unter Verwendung von Kunststoffen, wie Polyethylen, Polypropylen oder Polyester hergestellt werden.

5. Folie (10) zum Herstellen flexibler Verpackungen nach Anspruch 1, **dadurch gekennzeichnet, dass** die zweite Schicht (15) aus Aluminium hergestellt ist und mit zumindest einer dritten Schicht verbunden ist, die aus Kunststoffen oder koextrudierten Sperrschichtmaterialien hergestellt sind.

6. Folie (10) zum Herstellen flexibler Verpackungen nach Anspruch 1, **dadurch gekennzeichnet, dass** die zumindest eine erste Schicht (11) mit der zumindest einen zweiten Schicht (15) über eine Klebstoffschicht oder durch Extrusion von Polyolefinharz verbunden ist.

7. Folie (10) zum Herstellen flexibler Verpackungen nach Anspruch 1, **dadurch gekennzeichnet, dass** sie eine oder mehrere Folien aufweist, die mit den ersten (11) und zweiten (15) Schichten verbunden sind, um ein Mehrschichtelement bereitzustellen, wobei die Folien aus Kunststoff oder Aluminium hergestellt sind.

8. Verfahren zum Herstellen einer Folie (10) nach Anspruch 1, ausgebildet um flexible Verpackungen herzustellen, bestehend aus:
- Verteilen eines adhäsiven Lackes (23) zumindest auf dem begrenzten transparenten Bereich (13) der ersten Schicht;
- Verbinden einer holografierten Folie (24) mit dem begrenzten Bereich (13) der ersten Schicht (11), auf der adhäsiver Lack (23) verteilt worden ist;
- Anpressen der holografierten Folie (24) an den begrenzten Bereich (13). auf dem adhäsiver Lack (23) verteilt worden ist, um so einen stabilen Transfer eines holografischen Bildes (14) auf der ersten Schicht (11) sicherzustellen;
- Verbinden der zumindest einen zweiten Schicht (15) mit der Seite der ersten Schicht (11), die mit dem holografischen Bild (14) versehen ist, um so die Folie (10) auszubilden.

9. Verfahren zum Herstellen einer Folie (10) nach Anspruch 8, das in dem Bedrucken einer Fläche der ersten Schicht (11) mit Ausnahme des transparenten Bereiches (13) besteht.

10. Verfahren zum Herstellen einer Folie (10) nach Anspruch 9, **dadurch gekennzeichnet, dass** die bedruckte Seite der ersten Schicht (11) diejenige Seite ist, mit der das holografische Bild (14) verbunden ist.

11. Verfahren zum Herstellen einer Folie (10) nach Anspruch 8, **dadurch gekennzeichnet, dass** das holografische Bild (14) von einer holografierten Folie (24) durch Verkleben und Andrücken auf den Bereich (13) der ersten Schicht (11), auf dem adhäsiver Lack (23) verteilt worden ist, transferiert wird.

12. Verfahren zum Herstellen einer Folie (10) nach Anspruch 11, bestehend im Wiederaufwickeln und in ein Register stellen des holografierten Films (24), nachdem das holografische Bild (14) auf den Bereich (13) der ersten Schicht (11), auf dem adhäsiver Lack (23) verteilt worden ist, transferiert wurde, um den holografierten Film (24) vollständig zu benutzen.

13. Verfahren zum Herstellen eines Filmes nach Anspruch 8, bestehend aus dem Verbinden der zumindest einen ersten Schicht (11) und/oder der zumindest einen zweiten Schicht (15) mit einer Folie oder mehreren Folien, um so ein Mehrschichtelement zu bilden, wobei die Folien aus Kunststoff oder Aluminium hergestellt sind.

## Revendications

1. Un film (10) pour fabriquer des emballages flexibles, comprenant :
- au moins une première feuille (11) munie d'au moins une partie transparente (13) ;
- une image holographique (14) collée sur ladite partie transparente (13), et
- au moins une deuxième feuille (15) ou de multiples feuilles couplées à ladite au moins une première feuille (11) et à ladite image holographique (14) de façon à former le film comme un élément multicouche, en enfermant ladite image holographique (14), qui est rendue non amovible, entre ladite au moins une première feuille (11) et ladite au moins une deuxième feuille (15),
**caractérisé en ce que** ladite au moins une partie transparente (13) et ladite image holographique (14) s'étendent sur une partie des surfaces entières desdites première (11) et deuxième (15) feuilles, une grande partie de la première feuille (11), non recouverte par l'image holographique (14), étant directement couplée à la deuxième feuille (15).

2. Un film (10) pour fabriquer des emballages flexibles selon la revendication 1, **caractérisé en ce que** ladite première feuille (11) comporte, à l'exception de ladite partie transparente (13), une impression (12) qui reproduit des dessins, des caractères et/ou des images sur une face.

3. Un film (10) pour fabriquer des emballages flexibles selon la revendication 2, **caractérisé en ce que** ladite première feuille (11) est réalisée au moins en partie en un matériau transparent.

4. Un film (10) pour fabriquer des emballages flexibles selon la revendication 1, **caractérisé en ce que** lesdites première (11) et deuxième (15) feuilles sont obtenues en utilisant des matériaux plastiques tels que le polyéthylène, le polypropylène, le polyester.

5. Un film (10) pour fabriquer des emballages flexibles selon la revendication 1, **caractérisé en ce que** ladite deuxième feuille (15) est réalisée en aluminium et est couplée à au moins une troisième feuille réalisée en plastique ou en des matériaux co-extrudés formant barrière.

6. Un film (10) pour fabriquer des emballages flexibles selon la revendication 1, **caractérisé en ce que** ladite au moins une première feuille (11) est couplée à ladite au moins une deuxième feuille (15) au moyen d'une couche adhésive ou par extrusion de résine de polyoléfine.

7. Un film (10) pour fabriquer des emballages flexibles selon la revendication 1, **caractérisé en ce qu'**il comprend un ou plusieurs films qui sont couplés aux dites première (11) et deuxième (15) feuilles de façon à produire un élément multicouche, lesdits films étant réalisés en plastique ou en aluminium.

8. Un procédé pour fabriquer un film (10) selon la revendication 1, adapté pour produire des emballages flexibles, consistant à :
- étaler un vernis adhésif (23) au moins sur ladite partie transparente limitée (13) de ladite première feuille ;
- coupler un film holographe (24) à ladite partie limitée (13) de ladite première feuille (11) sur laquelle le vernis adhésif (23) a été étalé ;
- comprimer ledit film holographe (24) sur la partie limitée (13) sur laquelle ledit vernis adhésif (23) a été étalé, de façon à fournir un transfert stable d'une image holographique (14) sur ladite première feuille (11) ;
- coupler ladite au moins une deuxième feuille (15) à ladite face de ladite première feuille (11) munie de ladite image holographique (14), de façon à former ledit film (10).

9. Un procédé pour fabriquer un film (10) selon la revendication 8, lequel consiste à imprimer une face de ladite première feuille (11) à l'exception de ladite partie transparente (13).

10. Un procédé pour fabriquer un film (10) selon la revendication 9, **caractérisé en ce que** ladite face imprimée de ladite première feuille (11) est la face à laquelle ladite image holographique (14) est couplée.

11. Un procédé pour fabriquer un film (10) selon la revendication 8, **caractérisé en ce que** ladite image holographique (14) est transférée depuis un film holographe (24) en la collant et en la comprimant sur la partie (13) de ladite première feuille (11) sur laquelle le vernis adhésif (23) a été étalé.

12. Un procédé pour fabriquer un film (10) selon la revendication 11, consistant à rebobiner et mettre en repérage ledit film holographe (24) après le transfert de ladite image holographique (14) sur la partie (13) de ladite première feuille (11) sur laquelle le vernis adhésif (23) a été étalé, afin d'utiliser complètement ledit film holographe (24).

13. Un procédé pour fabriquer un film (10) selon la revendication 8, consistant à coupler ladite au moins une première feuille (11) et/ou ladite au moins une deuxième feuille (15) à un ou plusieurs films de façon à former un élément multicouche, lesdits films étant réalisés en plastique ou en aluminium.
